# EUROPEAN PATENT APPLICATION

(11) **EP 1 643 734 A2**
(43) Date of publication of application: **05.04.2006**
(21) Application number: 05021008.7
(22) Date of filing: 27.09.2005
(51) Int. Cl.: H04M 1/21

(54) **Mobile telephone with improved functionality**

(30) Priority: 01.10.2004 IT MI20041876
(71) Applicant: Pedotti, Alessandra, 20120 Milano (IT)
(72) Inventor: Pedotti, Alessandra, 20120 Milano (IT)
(74) Representative: Alagem Modiano, Lara S.

(57) **Abstract**

A mobile telephone (1) with improved functionality comprising a telephone body (2) provided with a keypad (3) and a display (4), a corrective lens (6), adapted to magnify the characters shown on the display, being associated with the display.

## Description

The present invention relates to a mobile telephone with improved functionality. More particularly, the invention relates to a mobile telephone which can be used easily by any kind of person regardless of any sight problems that such person might have.

As is known, the diffusion of mobile telephones is increasingly widespread, and in this field there are still several unsolved problems.

In particular, current mobile telephones have a display which shows the number to be called, SMS messages, data of the telephone address book, and the like, with characters whose size is certainly not sufficient to be read without the aid of eyeglasses by people who have sight problems.

These people, when they have to answer the mobile telephone or enter a number in order to make a call, often do not have their eyeglasses available and therefore have great difficulty in using the telephone.

The increasing trend to miniaturize telephones has made this problem even more severe, since the displays of telephones contain an ever-increasing amount of information and therefore the characters have dimensions which certainly cannot be easily read by anyone without using eyeglasses.

The aim of the present invention is to provide a mobile telephone which allows people with sight problems to easily read the characters of the display without having to wear corrective eyeglasses.

Within this aim, an object of the present invention is to provide a mobile telephone which allows to adapt the display in order to address the visual defect of the user.

Another object of the present invention is to provide a mobile telephone which is highly reliable, relatively simple to manufacture and at competitive costs.

This aim and these and other objects, which will become better apparent hereinafter, are achieved by a mobile telephone with improved functionality, comprising a telephone body provided with a keypad and a display, characterized in that a corrective lens, adapted to magnify the characters shown on said display, can be associated with said display.

Further characteristics and advantages of the invention will become better apparent from the description of preferred but not exclusive embodiments of the mobile telephone according to the invention, illustrated by way of non-limiting example in the accompanying drawings, wherein:
Figure 1 is a perspective view of a mobile telephone according to a first embodiment of the invention;
Figure 2 is a perspective view of the mobile telephone of Figure 1;
Figure 3 is a perspective view of a second embodiment of the mobile telephone according to the present invention;
Figure 4 is a perspective view of a third embodiment of the mobile telephone according to the invention.

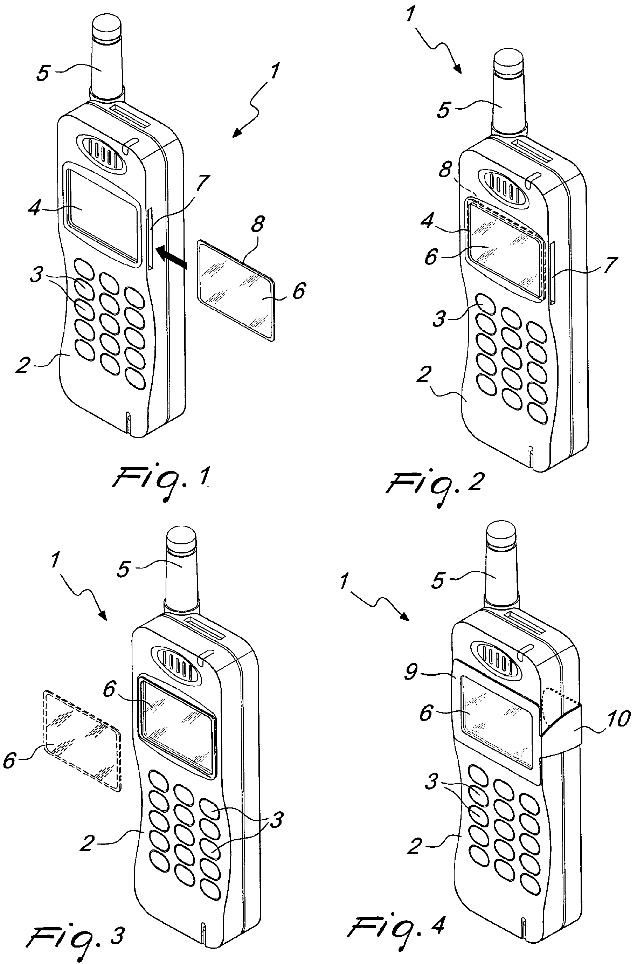

With reference to the figures, the mobile telephone according to the present invention, generally designated by the reference numeral 1, comprises a telephone body 2 provided with a keypad 3, a display 4, and an antenna 5. Conveniently, the display can be associated with means which are adapted to magnify the characters displayed on the liquid-crystal display. Such means can be constituted for example by a corrective lens 6, which is adapted to be arranged between the liquid-crystal matrix of the display and the transparent covering that covers it. For this purpose, the body 2 of the mobile telephone is provided conveniently with a slot 7, which allows the insertion of the lens 6 so that it is arranged exactly under the transparent covering of the liquid-crystal matrix of the display 4. This embodiment is shown in Figures 1 and 2.

The lens 6 can be conveniently provided with a corrective shape according to the visual requirements of the user.

Therefore, each user can select the corrective lens that suits his personal sight defect and insert it in the slot 7 so as to have at all times a mobile telephone that can be used without forcing the user to resort to sight-correction eyeglasses.

As an alternative, the lens 6 can be for example applied on top of the transparent covering of the display 4, as shown in Figure 3. In this case, the lens 6 is provided with an adhesive perimetric edge 8, which allows the user to attach the lens 6 above the display 4, so that the adhesive edge is arranged laterally with respect to the display.

In this case also, the lens 6 can be removed easily if the user for example experiences a loss of visual acuity and has to replace it with one which has a stronger corrective power.

The application of a removable lens to the display of the mobile telephone allows the user to use the telephone without having to necessarily wear glasses.

Figure 4 is a view of a third embodiment of the mobile telephone according to the invention, in which the lens 6 is inserted in an appropriately provided frame 9 provided with a hook 10, which is adapted to fasten to the lateral edge of the body of the mobile telephone. In this case, the frame is arranged on top of the display of the mobile telephone.

In practice it has been found that the mobile telephone according to the invention fully achieves the intended aim and objects, since it allows a user an assuredly easier use of the mobile telephone and therefore a greater use thereof.

The telephone thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. MI2004A001876 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A mobile telephone (1) with improved functionality, comprising a telephone body (2) provided with a keypad (3) and a display (4), **characterized in that** a corrective lens (6), adapted to magnify the characters shown on said display, can be associated with said display (4).

2. The telephone according to claim 1, **characterized in that** said corrective lens (6) is detachably associated with said display (4).

3. The telephone according to claim 1, **characterized in that** said telephone body (2) is laterally provided with a slot (7), which is adapted to allow the insertion of said lens (6) so as to arrange said lens on top of the liquid-crystal matrix of said display (4).

4. The telephone according to one or more of the preceding claims, **characterized in that** said lens (6) is provided with adhesive means (8) which allow to apply said lens to the transparent covering of said display.

5. The telephone according to claim 1, **characterized in that** said corrective lens (6) is supported by a frame (9) which is adapted to be fastened to the body (2) of said telephone on top of said display (4).
